# FASCICULE DE BREVET EUROPEEN

(11) **EP 1 491 669 B1**
(45) Date de publication et mention de la délivrance du brevet: **23.05.2012**
(21) Numéro de dépôt: 04356109.1
(22) Date de dépôt: 24.06.2004
(51) Int. Cl.: D03C 3/20, D03C 5/00

(54) **Mécanique d'armure pour la formation de la foule équipée d'un actionneur rotatif électrique et métier à tisser équipé d'une telle mécanique**
Fachbildungsvorrichtung mit elektrischer Drehaktuator und Webmaschine mit einer solchen Vorrichtung
Shedding mechanism with rotary electrical actuator and loom with such a mechanism

(30) Priorité: 25.06.2003 FR 0307677
(43) Date de publication de la demande: 29.12.2004
(73) Titulaire: STÄUBLI FAVERGES, 74210 Faverges (FR)
(72) Inventeur: Iltis, Patrick, 74410 Saint Jorioz (FR); Dagois, Claude, 74940 Annecy-le-Vieux (FR)
(74) Mandataire: Myon, Gérard Jean-Pierre

(56) Documents cités:
- FR-A- 2 772 795
- US-A- 3 867 658

## Description

L'invention a trait à une mécanique d'armure de métier à tisser comprenant, entre autres, au moins un actionneur rotatif électrique pour la formation de la foule sur un métier à tisser.

Dans le domaine des métiers à tisser, il est connu, par exemple de FR-A-2 772 795, d'utiliser un actionneur rotatif électrique pour commander l'enroulement d'une arcade d'une mécanique de type Jacquard. Comme expliqué dans FR-A-2 772 792, un tel actionneur peut être monté dans un boîtier prévu pour recevoir un ou plusieurs actionneurs dans une position telle que l'arcade peut être enroulée sur la poulie.

Les arcades des métiers à tisser modernes sont le plus souvent réalisées à partir de fibres synthétiques et les frottements de ces fibres contre certaines parties de la mécanique, notamment la poulie sur lesquelles elles s'enroulent et la ou les barrettes de guidage qu'elles traversent, génèrent des charges d'électricité statique. Des charges d'électricité statique sont également générées au niveau des fils de chaîne qui frottent les uns contre les autres. Ces charges sont susceptibles de remonter ou « ramper » à travers l'arcade associée, la poulie d'enroulement, le rotor de l'actionneur et le ou les stator(s). Le ou les stators sont isolés dans un enrobage en matière synthétique, de sorte que les charges électrostatiques s'accumulent sur le ou les stators et peuvent se décharger brutalement à travers la matière synthétique, une telle décharge étant susceptible d'endommager la carte électronique d'alimentation électrique et de contrôle d'un tel actionneur, ou de perturber son fonctionnement.

C'est à ces inconvénients qu'entend plus particulièrement remédier l'invention en proposant une mécanique d'armure dans laquelle les risques de perturbations ou d'endommagement de la carte électronique d'alimentation ou de commande associée à un actionneur sont supprimés.

Dans cet esprit, l'invention concerne une mécanique d'armure de métier à tisser comprenant au moins un actionneur rotatif électrique apte à déplacer une arcade, cet actionneur étant disposé dans un boîtier électriquement conducteur et comprenant un corps électriquement isolant dans lequel sont disposés un rotor et au moins un stator incluant au moins un bobinage et une armature. Cette mécanique est caractérisée en ce que l'actionneur comprend des moyens de liaison électrique entre l'armature du stator et l'extérieur du corps.

Grâce à l'invention, les charges électrostatiques provenant des arcades d'un métier à tisser de type Jacquard à travers la poulie et le rotor sont déchargées vers le boîtier conducteur, à partir de l'armature du stator, avant qu'elles ne risquent de remonter ou de « ramper » vers la carte électronique.

De façon avantageuse mais non obligatoire, une mécanique d'armure peut également incorporer une ou plusieurs des caractéristiques des revendications 2 à 9, prises dans toute combinaison techniquement admissible.

L'invention concerne également un métier à tisser équipé d'une mécanique d'armure telle que mentionnée ci-dessus. Un tel métier est plus fiable que ceux de l'état de la technique et ses conditions de fonctionnement peuvent être améliorées.

L'invention sera mieux comprise et d'autres avantages de celle-ci apparaîtront plus clairement à la lumière de la description qui va suivre d'un mode de réalisation d'une mécanique d'armure conforme à son principe, donnée uniquement à titre d'exemple et faite en référence aux dessins annexés dans lesquels :
- La figure 1 est une coupe longitudinale de principe d'un actionneur appartenant à une mécanique d'armure conforme à l'invention ;
- La figure 2 est une vue en perspective de l'actionneur de la figure 1 en cours de mise en place dans un boîtier de la mécanique ;
- La figure 3 est une vue analogue à la figure 2 lorsque l'actionneur est en place dans le boîtier et
- La figure 4 est une coupe partielle de principe dans le plan IV à la figure 3.

L'actionneur rotatif électrique 1 représenté sur les figures est destiné à assurer l'enroulement, sur une poulie 2, d'une arcade 3 reliée à un ou plusieurs fils de chaîne d'un métier à tisser, cette arcade et cet actionneur appartenant à une mécanique d'armure du type Jacquard. L'actionneur 1 est un actionneur biphasé. Il comprend un stator formé de deux éléments statoriques 4 et 5 alignés selon un axe X-X' et aptes à coopérer avec un rotor 6 comprenant un tube 7 en matériau amagnétique équipé de deux aimants permanents 8 et 9 disposés en vis-à-vis des deux éléments statoriques 4 et 5.

Les éléments 4 et 5 comprennent chacun un bobinage 4a, respectivement 5a, de fil électriquement conducteur, tel que du fil de cuivre, enroulé autour d'empilages de tôles magnétiquement conductrices qui constituent les armatures 4b et 5b des stators 4 et 5.

Un corps 10 en matériau électriquement isolant est surmoulé autour des éléments 4 à 6. Une ouverture 20 en forme de fente est ménagée sur une face latérale 11 du boîtier 10.

Une languette 30 conductrice et élastiquement déformable est insérée dans cette fente 20 de façon à venir en appui, et donc en contact électrique, avec chacune des armatures 4b et 5b.

Pour ce faire, la languette 30 comprend une partie médiane 31 à partir de laquelle s'étendent deux branches 32 et 33, ces branches étant conformées pour venir en appui élastique contre les armatures 4b et 5b. En particulier, les extrémités respectives 32a et 33a des branches 32 et 33 sont recourbées pour permettre un tel appui.

Au niveau de sa partie 31, la languette 30 est pourvue de dents 34 permettant son immobilisation par coincement dans les côtés supérieur et inférieur de la fente 20.

On note que la fente 20 est pourvue d'une zone médiane 21 légèrement plus large que ses zones latérales 22 et 23 pour tenir compte de l'épaisseur plus importante de la partie 31 de la languette 30 équipée des dents 34 par rapport à l'épaisseur des branches 32 et 33.

La géométrie de la languette 30 est telle que, au repos, la distance d entre l'extrémité 32a ou 33a de l'une au moins des branches 32 et 33 et la partie de celle-ci la plus éloignée du fond 31a de la partie médiane 31 est supérieure à la distance d' entre l'une des armatures 4b ou 5b et la surface extérieure de la face 11.

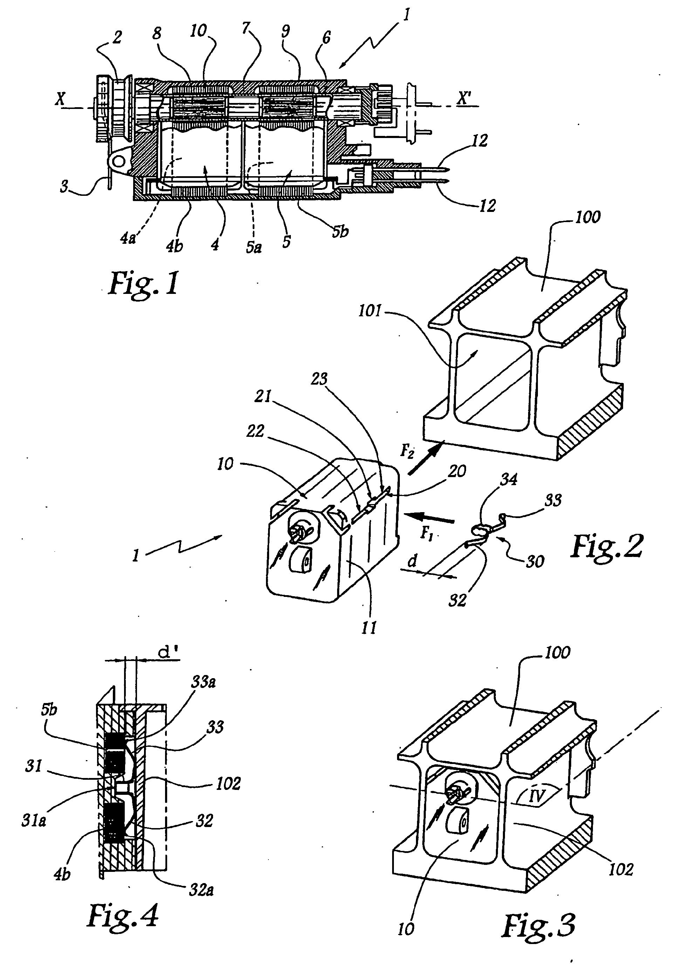

Ainsi, après que l'on a monté la languette 30 dans la fente 20 comme représenté par la flèche F₁ à la figure 2, la languette 30 fait saillie par rapport à la face 11. Après que l'on a inséré l'actionneur 10 dans un logement 101 d'un boîtier 100 fixe par rapport à la structure de la mécanique à laquelle il appartient, comme représenté par la flèche F₂, la languette 30 se déforme élastiquement et vient en appui élastique contre une nervure 102 du boîtier 100. Elle est alors en contact électrique à la fois avec les armatures 4b et 5b et avec la nervure 102.

Dans la configuration des figures 3 et 4, on utilise le caractère élastiquement déformable de la languette 30 qui est légèrement comprimée entre les armatures 4b et 5b et la nervure 102, la valeur de la distance entre les parties les plus éloignées des branches 32 et 33 étant alors ramenée à la valeur de d'.

Le boîtier 100 est réalisé dans un matériau électriquement conducteur, par exemple en zamak (marque déposée) ou en aluminium, et relié à la terre, ce qui permet de décharger, à travers la languette 30 et le boîtier 100, l'électricité statique circulant dans les armatures 4b et 5b, sans que cette électricité ne circule jusqu'à une carte électronique d'alimentation et/ou de contrôle de l'actionneur 1 à laquelle cet actionneur est relié par des broches 12 faisant saillie sur la face arrière de cet actionneur et qui sont électriquement reliées aux bobinages 4a et 5a.

L'invention est applicable à un actionneur triphasé, la géométrie de la languette pouvant alors être adaptée pour relier trois armatures statoriques au boîtier conducteur dans lequel est destiné à être mis en place l'actionneur.

Selon une variante non représentée de l'invention, la languette 30 pourrait être en partie surmoulée dans le corps 10 en matière synthétique et dépasser à l'extérieur de celui-ci.

Selon une autre variante, la languette pourrait remplacée par un ressort, par exemple un ressort spirale, reçu dans un logement du corps 10 et faisant saillie vers le boîtier 100.

## Revendications

1. Mécanique d'armure de métier à tisser comprenant au moins un actionneur rotatif électrique apte à déplacer une arcade, ledit actionneur (1) étant disposé dans un boîtier (100) électriquement conducteur et comprenant un corps (10) électriquement isolant dans lequel sont disposés un rotor (6) et au moins un stator (4, 5) incluant au moins un bobinage (4a, 5a) et une armature (4b, 5b), **caractérisée en ce que** ledit actionneur (1) comprend des moyens (30) de liaison électrique entre ladite armature (4b, 5b) et ledit boîtier.

2. Mécanique d'armure selon la revendication 1, **caractérisée en ce que** lesdits moyens de liaison comprennent un organe électriquement conducteur (30) immobilisé dans ledit corps.

3. Mécanique d'armure selon la revendication 2, **caractérisée en ce que** ledit organe (30) est inséré dans une ouverture (20) dudit corps (10), de telle sorte que ledit organe est en contact avec ladite armature (4b, 5b) et fait saillie par rapport à une face (11) dudit corps.

4. Mécanique d'armure selon la revendication 3, **caractérisée en ce que** ledit organe (30) est immobilisé par coincement dans ladite ouverture (20).

5. Mécanique d'armure selon la revendication 2, **caractérisée en ce que** ledit organe (30) est en partie surmoulé dans ledit corps (10).

6. Mécanique d'armure selon l'une des revendications précédentes, **caractérisée en ce que** lesdits moyens de liaison (30) sont élastiquement déformables.

7. Mécanique d'armure selon l'une des revendications précédentes, **caractérisée en ce que** ledit stator comprend au moins deux éléments statoriques (4, 5) pourvus chacun d'une armature (4b, 5b), lesdits moyens de liaison (30) étant aptes à relier chacune desdites armatures à l'extérieur dudit corps (10).

8. Mécanique d'armure selon l'une des revendications 2 à 5 et la revendication 7, **caractérisée en ce que** ledit organe (30) est pourvu de deux branches (32, 33) aptes à venir chacune en contact contre une armature (4b, 5b) ainsi que d'une zone médiane (31) par laquelle ledit organe est apte à être immobilisé par rapport dudit corps (10).

9. Mécanique d'armure selon les revendications 3 et 8, **caractérisée en ce qu'**au repos, la distance (d) entre l'extrémité (32a, 33a) de l'une au moins desdites branches (32, 33) et la partie de ladite branche la plus éloignée du fond (31a) de ladite partie médiane (31) est supérieure à la distance (d') entre l'une desdites armatures (4b, 5b) et une surface extérieure d'une face (11) dudit corps (10).

10. Métier à tisser équipé d'une mécanique d'armure (1-100) selon l'une quelconque des revendications précédentes.

## Claims

1. Weave system of a weaving loom comprising at least one electric rotary actuator adapted to displace a harness cord, said actuator (1) being disposed in an electrically conductive casing (100) comprising an electrically insulating body (10) in which are disposed a rotor (6) and at least one stator (4, 5) including at least one winding (4a, 5a) and an armature (4b, 5b), **characterized in that** said actuator (1) comprises means (30) for electrical connection between said armature (4b, 5b) and said casing.

2. Weave system according to Claim 1, **characterized in that** said connection means comprise an electrically conductive member (30) immobilized in said body.

3. Weave system according to Claim 2, **characterized in that** said member (30) is inserted in an opening (20) in said body (10), with the result that said member is in contact with said armature (4b, 5b) and projects with respect to a face (11) of said body.

4. Weave system according to Claim 3, **characterized in that** said member (30) is immobilized by wedging in said opening (20).

5. Weave system according to Claim 2, **characterized in that** said member (30) is partly overmoulded in said body (10).

6. Weave system according to one of the preceding Claims, **characterized in that** said connection means (30) are elastically deformable.

7. Weave system according to one of the preceding Claims, **characterized in that** said stator comprises at least two stator elements (4, 5) each provided with an armature (4b, 5b), said connection means (30) being adapted to connect each of said armatures to the outside of said body (10).

8. Weave system according to one of Claims 2 to 5 and Claim 7, **characterized in that** said member (30) is provided with two branches (32, 33) adapted each to come into contact against an armature (4b, 5b), as well as with a median zone (31) by which said member is adapted to be immobilized with respect to said body (10).

9. Weave system according to Claims 3 and 8, **characterized in that**, at rest, the distance (d) between the end (32a, 33a) of at least one of said branches (32, 33) and the part of said branch most remote from the bottom (31a) of said median part (3 1) is greater than the distance (d') between one of said armatures (4b, 5b) and an outer surface of a face (11) of said body (10).

10. Weaving loom equipped with a weave system (1-100) according to any one of the preceding Claims.

## Patentansprüche

1. Schaftmaschine einer Webmaschine mindestens ein elektrisches rotierendes Betätigungselement umfassend, das geeignet ist, eine Arkade zu bewegen, wobei das Betätigungselement (1) in einem elektrisch leitenden Gehäuse (100) angeordnet ist, das einen elektrisch isolierenden Körper (10) umfasst, in dem ein Rotor (6) und mindestens ein Stator (4, 5), der mindestens eine Wicklung (4a, 5a) und ein Joch (4b, 5b) einschließt, angeordnet sind, **dadurch gekennzeichnet, dass** das Betätigungselement (1) Mittel (30) zur elektrischen Verbindung zwischen dem Joch (4b, 5b) und dem Gehäuse aufweist.

2. Schaftmaschine nach Anspruch 1, **dadurch gekennzeichnet, dass** die Mittel zur Verbindung ein elektrisch leitendes Organ (30) aufweist, das in dem Körper festgelegt ist.

3. Schaftmaschine nach Anspruch 2, **dadurch gekennzeichnet, dass** das Organ (30) in eine Öffnung (20) des Körpers (10) derart eingefügt ist, dass das Organ in Kontakt mit dem Joch (4b, 5b) ist und in Bezug auf eine Fläche (11) des Körpers hervorragt.

4. Schaftmaschine nach Anspruch 3, **dadurch gekennzeichnet, dass** das Organ (30) durch Klemmung in der Öffnung (20) festgelegt ist.

5. Schaftmaschine nach Anspruch 2, **dadurch gekennzeichnet, dass** das Organ (30) teilweise in dem Körper (10) umformt ist.

6. Schaftmaschine nach einem der vorhergehenden Ansprüche, **dadurch gekennzeichnet, dass** die Mittel (30) zur Verbindung elastisch deformierbar sind.

7. Schaftmaschine nach einem der vorhergehenden Ansprüche, **dadurch gekennzeichnet, dass** der Stator mindestens zwei Statorelemente (4, 5) umfasst, die jeweils mit einem Joch (4b, 5b) versehen sind, wobei die Mittel (30) zur Verbindung geeignet sind, jedes dieser Jochs mit dem Äußeren des Körpers (10) zu verbinden.

8. Schaftmaschine nach einem der Ansprüche 2 bis 5 und dem Anspruch 7, **dadurch gekennzeichnet, dass** das Organ (30) mit zwei Schenkeln (32, 33), die geeignet sind, jeweils in Kontakt mit einem Joch (4b, 5b) zu kommen, sowie mit einer Mittelzone (31) versehen ist, durch die das Organ geeignet ist in Bezug auf den Körper (10) festgelegt zu werden.

9. Schaftmaschine nach den Ansprüche 3 und 8, **dadurch gekennzeichnet, dass** im Ruhezustand der Abstand (d) zwischen dem Ende (32a, 33a) von mindestens einem der Schenkel (32, 33) und dem am weitesten vom Boden (31a) des Mittelbereichs (31) entfernt liegenden Teil des Schenkels größer als der Abstand (d') zwischen einem der Jochs (4b, 5b) und einer äußeren Oberfläche einer Fläche (11) des Körpers (10).

10. Webmaschine, ausgerüstet mit einer Schaftmaschine (1-100) nach einem beliebigen der vorhergehenden Ansprüche.
